# EUROPEAN PATENT SPECIFICATION

(11) **EP 3 144 135 B1**
(45) Date of publication and mention of the grant of the patent: **17.04.2019**
(21) Application number: 16195610.7
(22) Date of filing: 31.08.2012
(51) Int. Cl.: B32B 3/24, A47J 31/06, B32B 33/00, B65D 65/38

(54) **MULTILAYERED MATERIAL AND CONTAINERS AND METHOD OF MAKING SAME**
MEHRLAGIGES MATERIAL UND BEHÄLTER UND VERFAHREN ZUR HERSTELLUNG DAVON
MATÉRIAU MULTICOUCHES ET RÉCIPIENTS ET SON PROCÉDÉ DE FABRICATION

(30) Priority: 01.09.2011 US 201161530026 P
(43) Date of publication of application: 22.03.2017
(62) Divisional of application: 12826821.6
(73) Proprietor: 2266170 Ontario, Inc., Mississauga, Ontario L4Y 1S4 (CA)
(72) Inventor: TROMBETTA, Liberatore A., Ancaster, Ontario L9G 4X6 (CA); FU, Yucheng, Guelph, Ontario N1G 2V7 (CA); PAYNTER, Dennis Dwight, Grapevine, TX Texas 7605 (US); KHAN, Daud Ahmed, Whitby, L1R 2V8 (CA)
(74) Representative: Nederlandsch Octrooibureau

(56) References cited:
- WO-A1-98/12250
- WO-A1-03/026892
- WO-A1-2010/106516
- WO-A1-2010/128844
- WO-A2-2009/031148
- US-A1- 2008 202 075

## Description

### FIELD

The described embodiments relate to multilayered materials and containers and methods of making same and in particular to multilayered materials and containers and methods of making same having improved barrier properties, manufacturing efficiencies or other advantages over conventional multilayered materials and containers.

### BACKGROUND

WO03020892 discloses a container having a lid formed from a multilayered polymeric film.

Containers for food or other environmentally sensitive products often are formed of multilayered materials that include one or more barrier layers providing barriers against one or more environmental factors such as light, oxygen, and moisture. Oxygen sensitive products, for example, may be contained within packaging having an oxygen barrier layer. The air within the container may be evacuated and/or replaced with an inert gas such as nitrogen prior to sealing the container. This provides the packaged product with an extended shelf life. Generally, the better the barrier protection for the container the longer the shelf life.

A weak point for such containers, in terms of barrier protection, is the seal used for sealing one or more multilayered materials together to contain the food or other perishable products within the container.

Coffee pods for instance may be contained in bags or pouches formed of a sheet of multilayered material that is folded and sealed along edge seams to define an enclosed space for containing the coffee pods. The sheet of multilayered material is typically formed of an outer layer of a transparent protective material (outer base layer) such as polyolefin or polyester, a middle layer of a graphics material (graphics layer) such as ink applied to another middle layer of a barrier material (barrier layer) such as aluminum foil, metalized polyester or Ethylene Vinyl Alcohol (EVOH) and an inner layer of a sealing material (sealing layer) such as Polyethylene (PE) or Polypropylene (PP). The barrier layer in particular acts as a barrier for restricting the passage of oxygen.

The edge seams for such containers are typically formed by heat sealing (also known as welding) the sealing layer of one edge portion of the sheet to the sealing layer of another edge portion of the sheet. Heat sealing may be accomplished through a variety of techniques, such as by direct contact using heated work pieces or by indirect contact using ultrasonic waves, to heat one or both of the respective layers or surfaces to a sufficient melt temperature to form a seal, bond or weld.

The edge seams of such containers typically comprise a double layer of sealing material. Sealing materials such as PE and PP have inferior barrier properties compared to the barrier properties of barrier materials such as aluminum foil, metalized polyester or EVOH. The combined sealing layers are exposed to oxygen along the seam and thus are a weak point in terms of barrier protection.

Another example is a single serve beverage capsule formed of multilayered materials and containing a desired dosage of coffee grounds, tea leaves or other desired ingredients. Such capsules typically comprise a cup shaped body that contains the desired ingredients and a cover that is heat sealed to a lip of the body. Such capsules may also contain a filter that is typically adhered to an interior facing surface of the body so as not to interfere with the seal between the cover and the body.

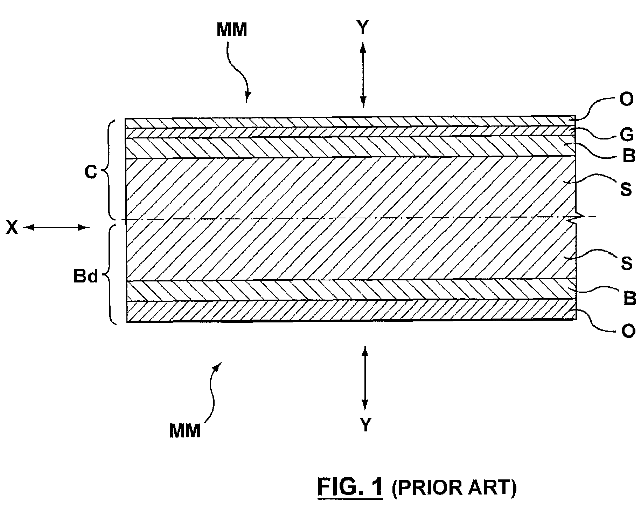

A sealed edge for a conventional beverage capsule is shown in Figure 1 (Prior Art). The multilayered material MM for the body Bd of such capsules is typically formed of an outer base layer O of Polystyrene (PS), a barrier layer B of EVOH and a sealing layer S of PE or PP. The barrier layer B of EVOH in particular acts as a barrier for restricting passage of oxygen. The multilayered material MM for the cover C of such capsules is typically formed of an outer base layer O of polyethylene terephthalate (PET), a graphics layer G of ink applied to a barrier layer B of aluminum foil and a sealing layer S of PE or PP. The barrier layer B of aluminum foil in particular acts as a barrier for restricting passage of oxygen.

The sealing layer S of the cover C is typically heat sealed to the sealing layer S on the lip of the body Bd to form a seal. The resultant seal formed of materials such as PE or PP over the width of the lip provides an inferior barrier to undesired elements such as oxygen along the plane of the seal in the direction of arrow X as compared to the barrier provided transversely in the direction of arrow Y through barrier layers B formed of materials such as PET.

Adhering the filter to an interior facing surface of the body of such single serve beverage capsules presents additional disadvantages including manufacturing inefficiencies as well as challenges associated with adhering to a sidewall that is weakened due to stretching of the body material through thermoforming.

There is a need for multilayered barrier materials and containers formed of such materials that address the above problems or that otherwise provide advantages over conventional multilayered barrier materials and containers.

### SUMMARY

In one aspect the invention provides a multilayered material comprising:
a) a barrier layer formed of a material adapted for deterring one or more undesired elements from passing through the barrier layer;
b) a sealing layer formed of a material adapted for forming a seal; and
c) a gasket layer formed of a material having a plurality of channels adapted for receiving at least a portion of the material for said sealing layer, wherein said barrier layer and said gasket layer have a higher melt temperature than said sealing layer.

In another aspect the invention provides a container comprising:
a) at least one multilayer material having
   i) a barrier layer formed of a material adapted for deterring one or more undesired elements from passing through the barrier layer; and
   ii) a sealing layer formed of a material adapted for forming a seal; and
b) at least one gasket strip formed of a material having a plurality of channels adapted for receiving at least a portion of the material for said sealing layer;
wherein said barrier layer and said gasket strip have a higher melt temperature than said sealing layer and wherein the container is formed from said at least one multilayered material with said sealing layer forming a sealed edge with said at least one gasket strip being disposed within said sealed edge.

In another aspect the invention provides a beverage capsule for use in a beverage preparing machine, said beverage capsule comprising:
a body having a side wall extending from an end wall to an opening to define an interior space, said opening being surrounded by a flange;
a filter disposed in said body to define an ingredients chamber between said opening and said filter;
one or more ingredients disposed in said ingredients chamber for preparing a desired beverage; and
a cover for covering said opening;
said filter including a gasket portion disposed between said flange and said cover, said gasket portion having a plurality of channels containing a sealing material adapted for sealing said gasket portion between said flange and said cover.

In another aspect the invention provides a method for making a beverage capsule for use in a beverage preparing machine, said method comprising the steps of:
heat sealing a gasket portion of a moldable filter to a flange of a body, said body having a side wall extending from an end wall to an opening to define an interior space, said opening being surrounded by said flange;
molding said filter to a desired shape within said interior space to define an ingredients chamber between said opening and said filter;
filling said ingredients chamber with a desired amount of ingredients; and
heat sealing a cover to said gasket portion for covering said opening;
wherein said body and said cover each comprise a multilayer material having (i) a barrier layer formed of a material adapted for deterring one or more undesired elements from passing through the barrier layer and (ii) a sealing layer formed of a material adapted for sealing to another surface;
and wherein said gasket portion has a plurality of channels for receiving at least a portion of said sealing material for said body and said cover, said gasket portion having a higher melt temperature than said sealing layer of said body and said cover.

In another aspect, the invention provides a method for making a beverage capsule for use in a beverage preparing machine, said method comprising the steps of:
securing a gasket portion of a filter to a flange of a body, said body having a side wall extending from an end wall to an opening to define an interior space, said opening being surrounded by said flange, said filter having a filter portion disposed within said interior space to define an ingredients chamber between said opening and said filter;
filling said ingredients chamber with a desired amount of ingredients; and
heat sealing a cover to said gasket portion for covering said opening;
wherein at least one of said body and said cover comprises a multilayer material having (i) a barrier layer formed of a material adapted for deterring one or more undesired elements from passing through the barrier layer and (ii) a sealing layer formed of a material adapted for sealing to another surface;
and wherein said gasket portion has a plurality of channels for receiving at least a portion of said sealing material for at least one of said body and said cover, said gasket portion having a higher melt temperature than said sealing layer of said body and said cover.

Other aspects and features of the teachings disclosed herein will become apparent, to those ordinarily skilled in the art, upon review of the following description of the specific examples of the specification.

### DRAWINGS

The drawings included herewith are for illustrating various examples of articles, methods, and apparatuses of the present specification and are not intended to limit the scope of what is taught in any way. For simplicity and clarity of illustration, where considered appropriate, reference numerals may be repeated among the drawings to indicate corresponding or analogous elements.
Figure 1 (Prior Art) is a schematic sectional view of the edge seam of a conventional beverage capsule;
Figure 2 is an enlarged schematic perspective view of a multilayered material in accordance with one embodiment of the present invention;
Figure 3 is a schematic sectional view of the multilayered material of Figure 2 as viewed along lines 3-3;
Figure 4 is a schematic sectional view of a multilayered material in accordance with another embodiment of the present invention;
Figure 5 is a schematic sectional view of a multilayered material in accordance with another embodiment of the present invention;
Figure 6 is a schematic sectional view of a multilayered material in accordance with another embodiment of the present invention;
Figure 7 is a perspective view of a multilayered material that is folded to form a container in accordance with one embodiment of the present invention;
Figure 8 is a sectional view of a seam for the container formed of the multilayered material as shown in Figure 7;
Figure 9 is an exploded perspective view of a multilayered material that is folded to form a container together with gasket strips in accordance with another embodiment of the present invention;
Figure 10 is a sectional view of a seam for the container formed of the multilayered material and gasket strips as shown in Figure 9;
Figure 11 is an exploded sectional view of a container in accordance with another embodiment of the present invention; and
Figure 12 is an exploded sectional view of a container in accordance with another embodiment of the present invention.

### DESCRIPTION OF VARIOUS EMBODIMENTS

Various apparatuses or methods will be described below to provide examples of the claimed invention.

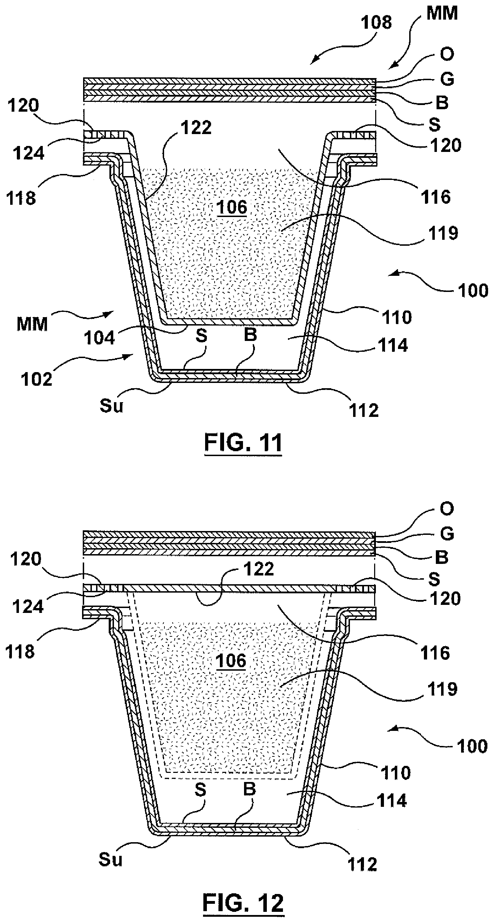

A multilayered material in accordance with the present invention is shown generally at 20 in the Figures. Multilayer material comprises a barrier layer 22 and a sealing layer 24. Multilayer material may also include a gasket layer 26 or this may be provided as a separate element when multilayer material is formed into a container 50 as described further below. Multilayer material may also include one or more other desired layers as known in the art such as a graphics layer 28, an outer base layer 30 and a support layer Su (as shown for example in figures 11 and 12).

Barrier layer 22 is formed of a material, as known in the art, that is adapted to provide barrier protection to deter one or more undesired elements, such as oxygen, light or moisture, from permeating through multilayered material 20 and in particular is adapted to deter permeation of undesired elements transversely through the plane of barrier layer 22 as depicted by arrow Y. Barrier materials may include metals, such as metallic foils and metallized polyesters, polymers or copolymers, such as Ethylene Vinyl Alcohol (EVOH), as well as other materials known to provide barrier properties.

Sealing layer 24 is formed of a material that is adapted to form a seal with another surface for instance by way of a heat seal (or weld) using one of a variety of techniques, such as by direct contact using heated work pieces or by indirect contact using ultrasonic waves, to heat one or both of the respective layers or surfaces to a sufficient melt temperature to form a seal, bond or weld. Multilayer material 20 may thus be folded and sealed to itself or to another material, such as another multilayered material, to form a container as described further below. The material for sealing layer 24 is also preferably adapted to be exposed to the contents of container without negatively impacting such contents. For example, if the contents of container are food products, sealing layer 24 is preferably formed of an approved food grade material. Sealing materials may include polyethylene (PE) or polypropylene (PP) or other materials with sealing properties.

Gasket layer 26 is formed of a material having a plurality of channels 34 that extend at least partway and preferably extend fully through gasket layer 26. Channels 34 are adapted to receive at least a portion of the material of sealing layer 24 and preferably allow the material of sealing layer 24, when heated to its melt temperature, to flow through channels 34 from one side of gasket layer to the other. Gasket layer 26 preferably is formed of a material having superior barrier properties compared to the barrier properties of the material of sealing layer 24.

Gasket layer 26 may also or alternatively be adapted to provide other benefits to multilayered material 20 or to containers formed of multilayered material 20 such as manufacturing efficiencies, improved strength, tear resistance and/or liner or filtering properties.

Gasket material may be formed of a plurality of fibres (which may include multicomponent fibres), such as polyethylene terephthalate (PET), nylon or metallic fibres, that may be bound or interlocked to form a sheet or web having channels 34. Gasket material may alternatively be formed of a non-continuous material, such as a plurality of fibres that are deposited to form gasket layer without the fibres being bound or interlocked to one another. Gasket material may alternatively be formed of a sheet, such as a PET, nylon, polymer or metallic sheet, that is perforated to define a plurality of channels 34.

Gasket layer occupies a portion, and preferably a substantial portion of the thickness of the seal formed between sealing layers 24 for containers formed of one or more multilayer materials 20. Channels 34 allow gasket layer 26 to become partially or fully embedded within the material of one or more sealing layers 24 with at least a portion of the material of the sealing layers 24 becoming disposed within channels 34.

The resultant seal formed between sealing layers 24 of one or multilayered materials 20 having embedded gasket layers 26 with superior barrier properties in accordance with the present invention has improved barrier properties along the plane of the seal in the direction of arrow X compared to the seal for conventional multilayered materials MM.

For example, the sealing layer S of a conventional multilayered material MM may be formed of a material having a thickness T and permeability of P. Thus the permeability of the seal formed between identical sealing layers S of two conventional multilayered materials MM is P. A multilayered material 20 in accordance with the present invention may have a sealing layer 24 formed of a material having a thickness T and permeability of P and a gasket layer 26 formed of a material with a thickness T and permeability of ½ P. If gasket layer 26 is fully embedded within sealing layer 24 with half of the material of sealing layer 24 disposed within channels 34 defined in gasket layer 26 then the permeability of the seal formed between identical multilayered materials 20 is ¾ P. The greater the ratio of gasket layer 26 relative to sealing layer 24 through the thickness of the seal, the better the barrier properties for the seal. Note that permeability P in this example is intended to be representative and not a precise amount. The point of the example is to show that superior barrier properties are provided using a multilayered material 20 having a gasket layer 26 with superior barrier properties in accordance with the present invention compared to a conventional multilayered material MM as shown in Figure 1 (Prior art).

Referring back to the other layers that may be desired for multilayer material 20, in raphics layer 28 is formed of an ink or other suitable material that is adapted for presenting graphics or one or more background colours as desired for a container formed of multilayered material 20. Outer base layer 30 is preferably formed of a transparent material adapted to cover and protect graphics layer 28 while allowing the graphics or background colours to be visible. Outer base material may be formed of polyolefin or polyester or other materials as known in the art. Support layer 32 is preferably formed of a material that may be formed into a desired shape such as a moldable metal or polymer material.

Gasket layer 26 and barrier layer 22 (and other layers where applicable such as graphics layer 28, outer protective layer 30 and support layer Su) are formed at least in part of materials having melt temperatures that are sufficiently higher than the melt temperature of sealing layer 24 in order that the properties of the respective layers are not adversely effected when multilayered material 20 is heated to or above the melt temperature of sealing layer 24 in order to form a seal. Gasket layer 26 for example may be formed of bicomponent fibres that define channels 34. The bicomponent fibres may include a portion that has a melt temperature that is higher than the melt temperature of sealing layer 24 and a portion that is the same or lower than the melt temperature of sealing layer 24. As a result, when the multilayered material 20 is heated to or above the melt temperature of sealing layer 24, a portion of the bicomponent fibre forming gasket layer 26 may melt (which may enhance the seal formed with sealing layer 24) while the remainder of bicomponent fibre will remain unaffected so as to continue to define channels 34.

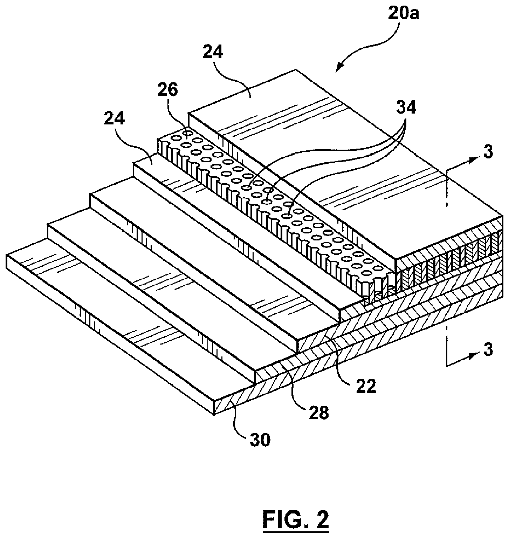

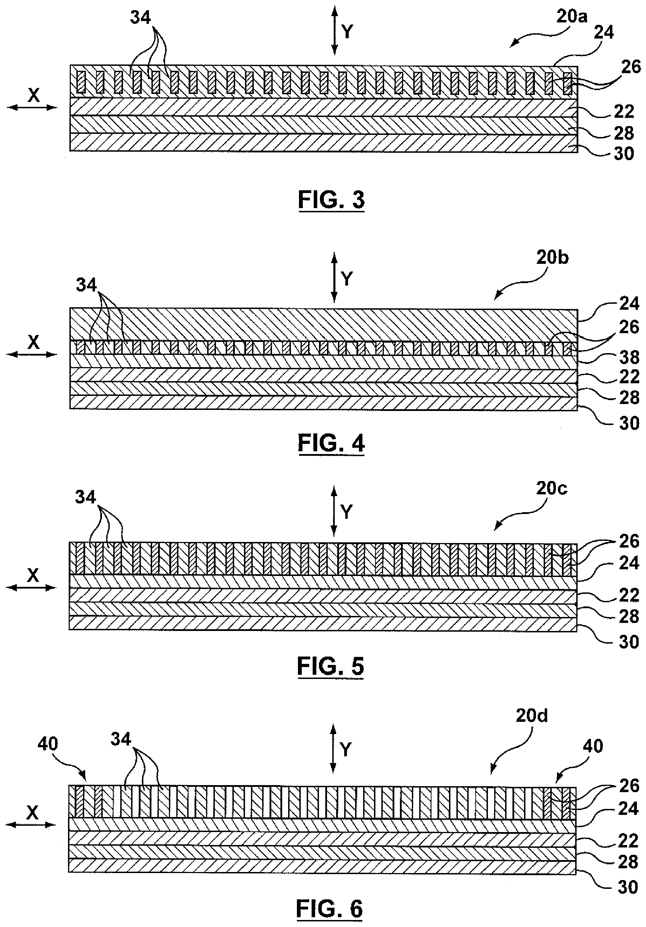

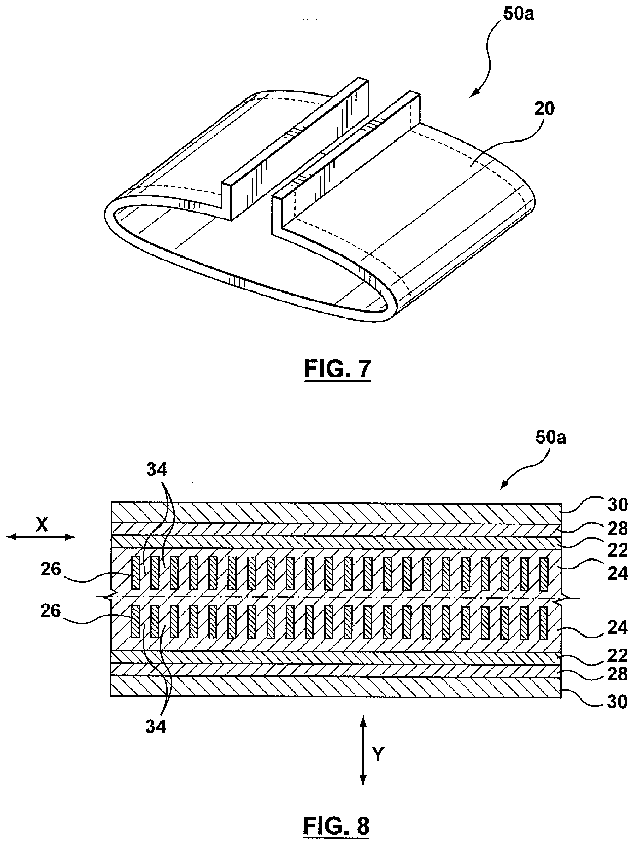

Referring to Figures 2 and 3, a multilayer material 20a in accordance with one embodiment of the present invention is shown. Multilayer material 20a includes barrier layer 22, sealing layer 24 and gasket layer 26 as well as graphics layer 28 and outer base layer 30 all as described above. Gasket layer 26 is embedded fully within sealing layer 24. When multilayered material 20a is sealed to another surface, such as the sealing layer 24 of a folded over portion of the same multilayer material 20a, sealing layer 24 is heated to its melt temperature (or higher than its melt temperature but less than melt temperatures of other layers) and pressed against the abutting surface under a desired pressure for a desired dwell time in order that it may form a seal with the abutting surface (as shown in Figure 8).

For this and the other embodiments described below, it will be appreciated that the desired melt temperature, pressure and dwell time for forming a desired seal are interdependent and also dependent on the type and thickness of materials as well as the manufacturing conditions and choice of manufacturing equipment. For example, if the sealing layer 24 is LDPE, the desired melt temperature may be in the range of 120-220 degrees Celsius (as long as lower than melt temperature for other layers), the desired pressure may be in the range of 20-100 psi and the desired dwell time may be in the range of 0.2 milliseconds to three seconds.

Referring to figure 4, an enlarged schematic cross section (that is not necessarily to scale) of another embodiment of multilayer material is shown generally at 20b. Multilayer material 20b includes barrier layer 22, sealing layer 24 and gasket layer 26 as well as graphics layer 28 and outer base layer 30 all as described above. Multilayer material 20b further includes a bonding layer 38 disposed between barrier layer 22 and gasket layer 26 for bonding the two layers together. Bonding layer 38 may be formed of the same material as sealing layer 24 or it may be formed of a different material suitable for bonding gasket layer 26 to barrier layer 22. When multilayered material 20b is sealed to another surface, such as the seating layer 24 of a folded over portion of the same multilayer material 20b, sealing layer 24 is heated to its melt temperature (or higher than its melt temperature but less than melt temperatures of other layers) and pressed against the abutting surface under a desired pressure for a desired dwell time in order that it may flow at least partially, and preferable fully, into channels 34 of gasket layer 26 while maintaining sufficient sealing material to form a seal with the abutting surface. It will be appreciated that a sufficient thickness of sealing layer 24 is required in order to have sufficient material to flow into channels 34 while having sufficient material remaining to seal to the abutting surface. If bonding layer 38 is also formed of the same material as sealing layer 24 then channels 34 may be partially filled with the material from bonding layer 38 and less thickness for sealing layer 24 is required.

Referring to figure 5, an enlarged schematic cross section (that is not necessarily to scale) of another embodiment of multilayer material is shown generally at 20c. Multilayer material 20c includes barrier layer 22, sealing layer 24 and gasket layer 26 as well as graphics layer 28 and outer base layer 30 all as described above. In this embodiment however, sealing layer 24 is disposed against barrier layer 22 and then gasket layer 26 is disposed against sealing layer 24 to form an exterior surface (that in turn is adapted to form an interior surface of a container formed from such multilayered material 20c). In this embodiment, gasket layer 26 is preferably embedded partially within sealing layer 24 with a portion of the material of sealing layer 24 being received within the channels 34. When multilayered material 20c is sealed to another surface, such as the gasket layer 26 of a folded over portion of the same multilayer material 20c, sealing layer 24 is heated to its melt temperature (or higher than its melt temperature but less than melt temperatures of other layers) and pressed against the abutting surface under a desired pressure for a desired dwell time in order that it may flow through the channels 34 of gasket layer 26 to form the seal with the abutting surface. Multilayered material 20c may alternatively be sealed to another material with a sealing layer, such as a conventional multilayered material having a sealing layer on its exterior surface, wherein the sealing layers of both materials are heated to their melt temperatures (or higher than its melt temperature but less than melt temperatures of other layers) and pressed against the abutting surface under a desired pressure for a desired dwell time in order that they may flow through the channels 34 of gasket layer 26 to form the seal. It will be appreciated that a sufficient thickness of sealing layer 24 is required in order to have sufficient material to flow fully through channels 34 to seal to another surface formed of the same multilayer material 20c. If sealing to another material having a sealing layer on its exterior surface then less thickness of sealing layer 24 is required.

Referring to figure 6, an enlarged schematic cross section (that is not necessarily to scale) of another embodiment of multilayer material is shown generally at 20d. Multilayer material 20d includes barrier layer 22, sealing layer 24 and gasket layer 26 as well as graphics layer 28 and outer base layer 30 all as described above. In this embodiment, sealing layer 24 is again disposed against barrier layer 22 and gasket layer 26 is again disposed against sealing layer 24 to form an exterior surface (that in turn is adapted to form an interior surface of a container formed from such multilayered material). In this embodiment however, gasket layer 26 is disposed against but not secured to sealing layer 24 other than at desired distinct sealing points 40. For example, multilayered material 20d may be formed and then subsequently cut into blanks configured to form a desired container or portion of a desired container. Desired sealing points 40 of such blanks (such as portions of the peripheral edge that are intended to subsequently form an edge seal of a container formed from such multilayered material 20d) may be heated and sealed in order that gasket layer 26 is secured to, and preferably embedded at least partially within, sealing layer 24. This sealing operation is preferably conducted in conjunction with the operation for cutting the blanks. The resultant blank of multilayered material 20d will have a gasket layer that is secured to the remainder of the multilayered material 20d only at the desired sealing points 40. When multilayered material 20d is sealed to another surface, such as the gasket layer 26 of a folded over portion of the same multilayer material 20d, sealing layer 24 is heated to its melt temperature (or higher than its melt temperature but less than melt temperatures of other layers) and pressed against the abutting surface under a desired pressure for a desired dwell time in order that it may flow through the channels of gasket layer 26 to form the seal with the abutting surface. Multilayered material 20d may alternatively be sealed to an another material with a sealing layer, such as a conventional multilayered material having a sealing layer on its exterior surface, wherein the sealing layers of both materials are heated to their melt temperatures (or higher than its melt temperature but less than melt temperatures of other layers) and pressed against the abutting surface under a desired pressure for a desired dwell time in order that they may flow through the channels 34 of gasket layer to form the seal. It will be appreciated that a sufficient thickness of sealing layer 24 is required in order to have sufficient material to flow fully through channels 34 to seal to another surface formed of the same multilayer material 20c. If sealing to another material having a sealing layer on its exterior surface then less thickness of sealing layer 24 is required.

Referring to Figure 7, an exploded perspective view of a container in accordance with one embodiment of the present invention is shown at 50a. Container 50a is in the form of a bag made from a multilayered material 20 in accordance with the present invention, in this example multilayered material 20a. Container may have other forms such as a cup shape container with a sealed cover. Multilayered material 20 is formed to a desired shape and overlapping abutting surfaces are sealed, by way of a heat seal or other known sealing processes, to define an interior space for containing desired contents. The air within container 50a may be evacuated and/or replaced with an inert gas such as nitrogen prior to sealing of contents within container 50a.

Referring to Figure 8, a magnified schematic cross-sectional view (that is not necessarily to scale) of a sealed edge for container 50a is shown. Material from sealing layers 24 is disposed within channels 34 defined in gasket layers 26. Gasket layers 26 substantially fill the space in the sealed edge between barrier layers 22 and sealing layers 24 to provide improved barrier protection against undesired elements and in particular to deter permeation of undesired elements along the plane of gasket layer 26 as depicted by arrow X.

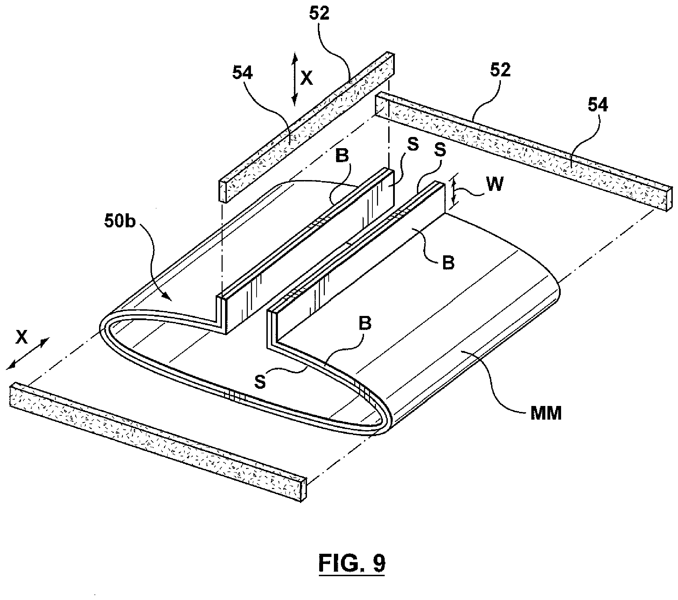

Referring to Figure 9, an exploded perspective view of a container in accordance with another embodiment of the present invention is shown at 50b. Container 50b is in the form of a bag that may be made from a conventional multilayered material MM having a sealing layer S for sealing abutting surfaces together. Container may have other forms such as a cup shape container with a sealed cover. Container 50b further includes gasket strips 52 that are sized to be disposed between overlapping surfaces of the multilayered material MM prior to sealing. Gasket strips 54 may be elongate strips as shown but may have other shapes, such as a ring shape, adapted for the specific shape or form of the portion of container 50b being sealed. Gasket strips 52 are each formed of a material having channels 54, similar to the material for gasket layer 26 as described above, that are adapted to receive at least a portion of the material of sealing layer S. Gasket strips 52 are adapted to provide barrier protection against undesired elements and in particular are adapted to deter permeation of undesired elements along the plane of gasket strips 52 as depicted by arrow X.

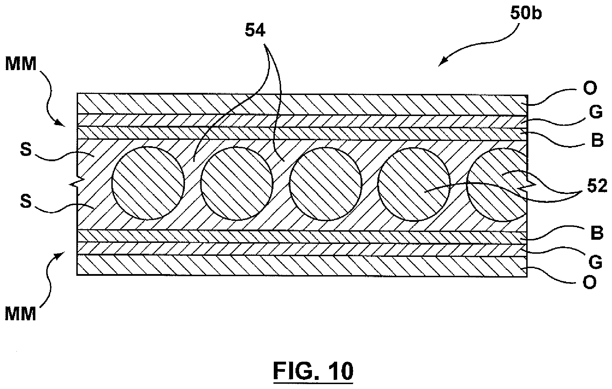

Referring to Figure 10, a magnified schematic cross-sectional view (that is not necessarily to scale) of a sealed edge for container 50b is shown. As shown, material from each of the abutting sealing layers S is received within channels 54 of gasket strip 52 to form the sealed edge. Gasket strip 52 substantially fills the space in the sealed edge between barrier layers B to provide improved barrier protection against undesired elements and in particular to deter permeation of undesired elements along the plane of gasket strip 52 as depicted by arrow X.

Referring to Figure 11, an exploded perspective view of a container 100 in accordance with another embodiment of the invention is shown. Container 100 is in the form of a cup shaped body with a cover that is adapted for use as a single serve beverage capsule. Container 100 includes a body 102, filter 104, ingredients 106 and cover 108.

Body 102 includes a side wall 110 and an end wall 112 together defining an interior space 114 for containing filter 104 and ingredients 106. An opening 116 is defined at one end of body 102. A flange 118 extends about the perimeter of opening 116. An ingredients chamber 119 is defined between filter 104 and opening 116 for receiving ingredients 106.

Filter 104 includes a gasket portion 120 that is adapted to be disposed between flange 118 and cover 108. Filter 104 also includes a filter portion 122 located inwardly from gasket portion 120 that is adapted for filtering a beverage from ingredients 106. Filter 104 is preferably formed from a single sheet of filtration material with gasket portion 120 and filter portion 122 being integral portions thereof.

Filter 104 may be molded prior to disposing in body 102 with filter portion 122 forming a tub or any other desired shape with a smooth or fluted side wall and with gasket portion 120 forming a flange to support filter 104 upon corresponding flange 118 of body 102. Alternatively, as shown in Figure 12, filter 104 may initially extend across interior space 114 or opening 116 of body 102 and is secured to flange 118 prior to being molded, for instance by using a heated mandrel, to form a tub or any other desired shape with a smooth or fluted side wall (as shown in dotted outline).

Ingredients 106 for the exemplary beverage capsule embodiments of container 100 may be coffee grounds, tea leaves, chocolate powder, milk powder, instant coffee or any other ingredients or combinations of ingredients that may be used to prepare a beverage or other consumable product.

Body 102 may be formed of a conventional multilayered material MM that includes a barrier layer B and a sealing layer S as known in the art. Body 102 may further include a support layer Su that is adapted for providing structural support to body 102 so that it may be molded to a desired shape. As well, body may include a graphics layer G and outer base layer O as described earlier.

For example, body 102 may comprise a barrier layer B formed of ethylene vinyl alcohol (EVOH), a sealing layer S formed of polyethylene (PE) or polypropylene (PP) and a support layer Su of high-impact polystyrene (HIPS). Alternatively, body 102 may comprise a barrier layer B of aluminum polyethylene terephthalate (PET) or polylactide (PLA) or a combination of these materials (having sufficient thickness and/or rigidity to provide structural support to body 102) and a sealing layer S of PE or PP.

Filter 104 may be formed from a non-woven fabric filtration material such aspolyester, polyethylene or nylon non-woven fabric that is preferably moldable. Non-woven fabric filter 104 preferably includes a plurality of fibres that are bound or interlocked by non-woven manufacturing techniques (preferably spunbond technology) to form a sheet or web having channels 124. Filter 104 may alternatively be formed of a metallic or polymer sheet such as PET or Nylon, which may be perforated to define channels 124 before or after forming a desired filter shape.

Cover 108 is preferably formed of a conventional multilayered material MM that includes a barrier layer B and a sealing layer S. More specifically, cover 108 may comprise an outer base layer O of polyolefin or polyester, a graphics layer G of ink applied to a barrier layer B of aluminum foil or metalized polyester and a sealing layer S of polyolefin.

Sealing layer S of body 102 and sealing layer S of cover 108 have respective melt temperatures that are less than the melt temperature of the other portions of the multilayer materials MM and in particular the gasket portion 120 of filter 104. For example, generally, PET has a melting point of approximately 260°C and PE has a melting point of approximately 110°C or PP has a melting point of approximately 160°C.

During assembly of container 100, filter 104 is disposed in body 102 with gasket portion 120 of filter resting upon flange 118. If gasket portion 120 is formed of a sufficiently rigid material to support filter 104 within body 102 during filling of ingredients 106, then ingredients 106 are disposed within filter 104 and cover 108 is positioned over gasket portion 120 to cover opening 116 and partially sealed in place. The air within interior space of capsule 100 is then replaced with an inert gas such as nitrogen. One example of a machine and process for replacing air within a capsule with an inert gas is described in WO 2010/007633. Cover 108 is then fully sealed to body 102 over gasket portion 120 to seal the interior space of capsule. In particular, cover 108 and body 102 are heated to the melt temperature of sealing layers S. The material from sealing layers S at least partially flows through channels 124 of gasket portion 120 to form a seal upon cooling.

If gasket portion 120 is not sufficiently rigid to support filter 104 within body 102 during filling of ingredients 106 then gasket portion 120 is first secured to flange 118 by heating flange 118 to melt temperature of sealing layer S so that the material of sealing layer S at least partially flows into channels 124 of gasket portion 120. Once sealing layer S sufficiently cools to support filter 104 within body 102, then, if filter 104 is not preformed, filter 104 may be molded for instance by using a heated mandrel to a desired shape within interior space 114 of body 102 to form the ingredients chamber 119, Then ingredients 106 are disposed within ingredients chamber 119 of filter 104 and cover 108 is positioned over gasket portion 120 to cover opening 116 and partially sealed in place. The air within interior space of capsule 100 is then evacuated and replaced with an inert gas such as nitrogen for example by using the machine and process noted above. Cover 108 is then fully sealed to body 102 over gasket portion 120 to seal the interior space of capsule. In particular, cover 108 is heated to the melt temperature of sealing layer S so that the material of sealing layer S at least partially flows into channels 124 of gasket portion 120 to form a seal upon cooling.

## Claims

1. A container (50b) comprising:
a) at least one multilayer material (MM) having
i) a barrier layer (B) formed of a material adapted for deterring one or more undesired elements from passing through the barrier layer; and
ii) a sealing layer (S) formed of a material adapted for forming a seal with another surface; and
b) at least one gasket strip (52) formed of a material having a plurality of channels (54) adapted for receiving at least a portion of the material for said sealing layer, wherein said barrier layer and said gasket strip have a higher melt temperature than said sealing layer;
**characterized in that** the container is formed from said at least one multilayered material with said sealing layer forming a sealed edge with said another surface and said at least one gasket strip being disposed within said sealed edge and at least partially embedded within said sealing layer with at least a portion of the material from said sealing layer being disposed at least partway into one or more of said plurality of channels.

2. A container as claimed in claim 1, wherein said gasket strip is fully embedded within said sealing layer.

3. A container as claimed in any one of claims 1 or 2, wherein said container comprises a bag.

4. A container as claimed in any one of claims 1 or 2, wherein said container is cup-shaped.

5. A container as claimed in claim 4, wherein said cup-shaped container further comprises a sealed cover.

6. A container as claimed in any one of the preceding claims, wherein said gasket strip is elongate.

7. A container as claimed in any one of the preceding claims, wherein said gasket strip is ring shaped.

8. A container as claimed in any one of the preceding claims, further comprising ingredients (106) disposed in said container.

9. A container as claimed in any one of the preceding claims, wherein the container is a single serve beverage capsule.

10. A multilayered material (20) comprising:
a) a barrier layer (22) formed of a material adapted for deterring one or more undesired elements from passing through the barrier layer;
b) a sealing layer (24) formed of a material adapted for forming a seal with another surface; and
c) a gasket layer (26) formed of a material having a plurality of channels (34) adapted for receiving at least a portion of the material for said sealing layer, wherein said barrier layer and said gasket layer have a higher melt temperature than said sealing layer, and wherein said gasket layer is at least partially embedded within said sealing layer with at least a portion of the material from said sealing layer being disposed at least partway into one or more of said plurality of channels.

11. A multilayered material as claimed in claim 10, wherein said gasket layer is fully embedded within said sealing layer.

12. A multilayered material as claimed in claim 10 or 11, wherein said gasket layer is disposed on an exterior surface of said multilayered material.

13. A multilayered material as claimed in claim 10, 11 or 12 wherein said gasket layer is at least partially embedded within said sealing layer at distinct sealing points (40) with the remainder of said gasket layer remaining unsecured to said sealing layer.

14. A method of making a container (50b), the method comprising:
- providing at least one multilayer material (MM) having
i) a barrier layer (B) formed of a material adapted for deterring one or more undesired elements from passing through the barrier layer; and
ii) a sealing layer (S) formed of a material adapted for forming a seal with another surface; and
- providing at least one gasket strip (52) formed of a material having a plurality of channels (54) adapted for receiving at least a portion of the material for said sealing layer, wherein said barrier layer and said gasket strip have a higher melt temperature than said sealing layer;
- forming the container from said at least one multilayered material with said sealing layer forming a sealed edge with said another surface and said at least one gasket strip being disposed within said sealed edge and at least partially embedded within said sealing layer with at least a portion of the material from said sealing layer being disposed at least partway into one or more of said plurality of channels.

## Patentansprüche

1. Behälter (50b), der umfasst:
a) wenigstens ein mehrschichtiges Material (MM), das aufweist:
1) eine Sperrschicht (B), die aus einem Material besteht, das so eingerichtet ist, dass es ein oder mehrere unerwünschtes/unerwünschte Element/e davon abhält, durch die Sperrschicht hindurch zu gelangen; und
2) eine Dichtungsschicht (S), die aus einem Material besteht, das so eingerichtet ist, dass es eine Dichtung mit einer anderen Fläche bildet; sowie
b) wenigstens einen Dichtungsstreifen (52), der aus einem Material besteht, das eine Vielzahl von Kanälen (54) aufweist, die so eingerichtet sind, dass sie wenigstens einen Teil des Materials für die Dichtungsschicht aufnehmen, wobei die Sperrschicht und der Dichtungsstreifen eine höhere Schmelztemperatur haben als die Dichtungsschicht, **dadurch gekennzeichnet, dass**
der Behälter aus dem wenigstens einen mehrschichtigen Material ausgebildet ist, wobei die Dichtungsschicht eine abgedichtete Kante mit der anderen Fläche bildet und der wenigstens eine Dichtungsstreifen innerhalb der abgedichteten Kante angeordnet und wenigstens teilweise in die Dichtungsschicht eingebettet ist und dabei wenigstens ein Teil des Materials von der Dichtungsschicht wenigstens teilweise in einem oder mehreren der Vielzahl von Kanälen angeordnet ist.

2. Behälter nach Anspruch 1, wobei der Dichtungsstreifen vollständig in der Dichtungsschicht eingebettet ist.

3. Behälter nach einem der Ansprüche 1 oder 2, wobei der Behälter einen Beutel umfasst.

4. Behälter nach einem der Ansprüche 1 oder 2, wobei der Behälter becherförmig ist.

5. Behälter nach Anspruch 4, wobei der becherförmige Behälter des Weiteren eine abgedichtete Abdeckung umfasst.

6. Behälter nach einem der vorangehenden Ansprüche, wobei der Dichtungsstreifen länglich ist.

7. Behälter nach einem der vorangehenden Ansprüche, wobei der Dichtungsstreifen ringförmig ist.

8. Behälter nach einem der vorangehenden Ansprüche, der des Weiteren in dem Behälter angeordnete Zutaten (106) umfasst.

9. Behälter nach einem der vorangehenden Ansprüche, wobei der Behälter eine Portions-Getränkekapsel ist.

10. Mehrschichtiges Material (20) das umfasst:
a) eine Sperrschicht (22), die aus einem Material besteht, das so eingerichtet ist, dass es ein oder mehrere unerwünschtes/unerwünschte Element/e davon abhält, durch die Sperrschicht hindurch zu gelangen;
b) eine Dichtungsschicht (24), die aus einem Material besteht, das so eingerichtet ist, dass es eine Dichtung mit einer anderen Fläche bildet; sowie
c) eine Dichtmittelschicht (S), die aus einem Material besteht, das eine Vielzahl von Kanälen (34) aufweist, die so eingerichtet sind, dass sie wenigstens einen Teil des Materials für die Dichtungsschicht aufnehmen, wobei die Sperrschicht und die Dichtmittelschicht eine höhere Schmelztemperatur haben als die Dichtungsschicht und die Dichtmittelschicht wenigstens teilweise in der Dichtungsschicht eingebettet ist und dabei wenigstens ein Teil des Materials von der Dichtungsschicht wenigstens teilweise in einem oder mehreren der Vielzahl von Kanälen angeordnet ist.

11. Mehrschichtiges Material nach Anspruch 10, wobei
die Dichtmittelschicht vollständig in der Dichtungsschicht eingebettet ist.

12. Mehrschichtiges Material nach Anspruch 10 oder 11 wobei
die Dichtmittelschicht an einer äußeren Fläche des mehrschichtigen Materials angeordnet ist.

13. Mehrschichtiges Material nach Anspruch 10, 11 oder 12 wobei
die Dichtmittelschicht an separaten Dichtungspunkten (40) wenigstens teilweise in der Dichtungsschicht angeordnet ist, und der Rest der Dichtmittelschicht nicht an der Dichtungsschicht befestigt wird.

14. Verfahren zum Herstellen eines Behälters (50b) wobei das Verfahren umfasst:
- Bereitstellen wenigstens eines mehrschichtigen Materials (MM), das aufweist:
1) eine Sperrschicht (B), die aus einem Material besteht, das so eingerichtet ist, dass es ein oder mehrere unerwünschtes/unerwünschte Element/e davon abhält, durch die Sperrschicht hindurch zu gelangen; und
2) eine Dichtungsschicht (S), die aus einem Material besteht, das so eingerichtet ist, dass es eine Dichtung mit einer anderen Fläche bildet; sowie
- Bereitstellen wenigstens eines Dichtungsstreifens (52), der aus einem Material besteht, das eine Vielzahl von Kanälen (54) aufweist, die so eingerichtet sind, dass sie wenigstens einen Teil des Materials für die Dichtungsschicht aufnehmen, wobei die Sperrschicht und der Dichtungsstreifen eine höhere Schmelztemperatur haben als die Dichtungsschicht,
- Ausbilden des Behälters aus dem wenigstens einem mehrschichtigen Material, wobei die Dichtungsschicht eine abgedichtete Kante mit der anderen Fläche bildet und der wenigstens eine Dichtungsstreifen innerhalb der abgedichteten Kante angeordnet und wenigstens teilweise in die Dichtungsschicht eingebettet wird und dabei wenigstens ein Teil des Materials von der Dichtungsschicht wenigstens teilweise in einem oder mehreren der Vielzahl von Kanälen angeordnet wird.

## Revendications

1. Conteneur (50b) comprenant :
a) au moins un matériau multicouche (MM) ayant
i) une couche barrière (B) formée d'un matériau adapté pour empêcher un ou plusieurs éléments indésirables de passer à travers la couche barrière ; et
ii) une couche d'étanchéité (S) formée d'un matériau adapté pour former un joint d'étanchéité avec une autre surface ; et
b) au moins une bande de joint (52) formée d'un matériau ayant une pluralité de canaux (54) adaptés pour recevoir au moins une partie du matériau pour ladite couche d'étanchéité, dans lequel ladite couche barrière et ladite bande de joint ont une température de fusion plus élevée que ladite couche d'étanchéité ;
**caractérisé en ce que**
le conteneur est formé à partir dudit au moins un matériau multicouche avec ladite couche d'étanchéité formant un bord scellé avec ladite autre surface et ladite au moins une bande de joint étant disposée à l'intérieur dudit bord scellé et au moins partiellement enrobée dans ladite couche d'étanchéité, avec au moins une partie du matériau provenant de ladite couche d'étanchéité étant disposée au moins partiellement dans un ou plusieurs de ladite pluralité de canaux.

2. Conteneur selon la revendication 1, dans lequel ladite bande de joint est entièrement enrobée dans ladite couche d'étanchéité.

3. Conteneur selon l'une quelconque des revendications 1 ou 2, dans lequel ledit conteneur comprend une poche.

4. Conteneur selon l'une quelconque des revendications 1 ou 2, dans lequel ledit conteneur est en forme de coupelle.

5. Conteneur selon la revendication 4, dans lequel ledit conteneur en forme de coupelle comprend en outre un couvercle scellé.

6. Conteneur selon l'une quelconque des revendications précédentes, dans lequel ladite bande de joint est allongée.

7. Conteneur selon l'une quelconque des revendications précédentes, dans lequel ladite bande de joint est en forme d'anneau.

8. Conteneur selon l'une quelconque des revendications précédentes, comprenant en outre des ingrédients (106) disposés dans ledit conteneur.

9. Conteneur selon l'une quelconque des revendications précédentes, dans lequel le conteneur est une capsule de boisson à service unique.

10. Matériau multicouche (20) comprenant :
a) une couche barrière (22) formée à partir d'un matériau adapté pour empêcher un ou plusieurs éléments indésirables de passer à travers la couche barrière ;
b) une couche d'étanchéité (24) formée d'un matériau adapté pour former un joint d'étanchéité avec une autre surface ; et
c) une couche de joint (26) formée d'un matériau ayant une pluralité de canaux (34) adaptés pour recevoir au moins une partie du matériau pour ladite couche d'étanchéité, dans lequel ladite couche barrière et ladite couche de joint ont une température de fusion plus élevée que ladite couche d'étanchéité, et dans lequel ladite couche de joint est au moins partiellement enrobée dans ladite couche d'étanchéité avec au moins une partie du matériau provenant de ladite couche d'étanchéité étant disposée au moins partiellement dans un ou plusieurs de ladite pluralité de canaux.

11. Matériau multicouche selon la revendication 10, dans lequel ladite couche de joint est entièrement enrobée dans ladite couche d'étanchéité.

12. Matériau multicouche selon la revendication 10 ou 11, dans lequel ladite couche de joint est disposée sur une surface extérieure dudit matériau multicouche.

13. Matériau multicouche selon la revendication 10, 11 ou 12, dans lequel ladite couche de joint est au moins partiellement enrobée dans ladite couche d'étanchéité au niveau de points d'étanchéité distincts (40), le reste de la couche de joint restant non fixé à ladite couche d'étanchéité.

14. Méthode de fabrication d'un conteneur (50b), la méthode comprenant:
- fournir au moins un matériau multicouche (MM) ayant
i) une couche barrière (B) formée à partir d'un matériau adapté pour empêcher un ou plusieurs éléments indésirables de passer à travers la couche barrière ; et
ii) une couche d'étanchéité (S) formée d'un matériau adapté pour former un joint d'étanchéité avec une autre surface ; et
- fournir au moins une bande de joint (52) formée d'un matériau ayant une pluralité de canaux (54) adaptés pour recevoir au moins une partie du matériau pour ladite couche d'étanchéité, dans laquelle ladite couche barrière et ladite bande de joint ont une température de fusion plus élevée que ladite couche d'étanchéité ;
- former le conteneur à partir dudit au moins un matériau multicouche avec ladite couche d'étanchéité formant un bord scellé avec ladite autre surface et ladite au moins une bande de joint étant disposée à l'intérieur dudit bord scellé et au moins partiellement enrobée dans ladite couche d'étanchéité avec au moins une partie du matériau provenant de ladite couche d'étanchéité étant disposée au moins partiellement dans un ou plusieurs desdits plusieurs canaux.
